**Europäisches Patentamt**

**European Patent Office**

**Office européen des brevets**

(19)

(11) Veröffentlichungsnummer: **0 237 031**
**A2**

# (12) EUROPÄISCHE PATENTANMELDUNG

(21) Anmeldenummer: **87103439.3**

(22) Anmeldetag: **10.03.87**

(51) Int. Cl.⁴: **C04B 35/52**

---

(30) Priorität: **11.03.86 DE 3608063**

(43) Veröffentlichungstag der Anmeldung:
**16.09.87 Patentblatt 87/38**

(84) Benannte Vertragsstaaten:
**AT BE CH DE ES FR GB IT LI LU NL SE**

(71) Anmelder: **C. CONRADTY NÜRNBERG GmbH & Co. KG**
**Grünthal 1-6**
**D-8505 Röthenbach a.d. Pegnitz(DE)**

(72) Erfinder: **Flügel, Peter, Dipl.-Ing.**
**Im Melben 31**
**D-8504 Stein(DE)**

(74) Vertreter: **Kern, Wolfgang, Dipl.-Ing. et al**
**Patentanwälte Kern, Brehm und Partner**
**Albert-Rosshaupter-Strasse 73**
**D-8000 München 70(DE)**

---

(54) **Kohlenstoffkörper hoher Porosität und Verfahren zu seiner Herstellung.**

(57) Die Erfindung betrifft ein Verfahren zur Herstellung von Geweben, insbesondere Mehrlagengeweben, auf einer Webmaschine, und schlägt zur Erreichung eines selbst bei hoher Schußdichte optimal - schonenden Schußeintrages vor, daß die Sohußdichten oberhalb 2O Schuß/cm liegen, die einzelnen Schüsse zunächst nicht angeschlagen werden und das Anschlagen erst jeweils nach Eintrag einer vollständigen, aus mehreren und in der Anzahl bestimmbaren Schüssen bestehenden Schußgruppe erfolgt.

FIG. 1

EP 0 237 031 A2

## Kohlenstoffkörper hoher Porosität und Verfahren zu seiner Herstellung

Die Erfindung betrifft einen Kohlenstoffkörper gemäß dem Oberbegriff des Anspruchs 1 sowie ein Verfahren zur Herstellung desselben.

Bei einem bekannten Kohlenstoffkörper und Verfahren (DE-PS 27 00 866) sind mehrere Lagen übereinandergestapelter Filze, die planparallele Flächen aufweisen, homogen miteinander verklebt, wobei das Ziel verfolgt wird, Filzstapel zu flachen, plattenförmigen Körpern zu verarbeiten, die eine hohe, mechanische Festigkeit und Formstabilität aufweisen, verbunden mit einem guten Wärmeisolationsvermögen und geringen Schwindungen beim Verkoken und der Fähigkeit, sich selbst zu tragen.

Zu diesem Zweck erhält bei dem genannten Stand der Technik der Kohlenstoffkörper eine Rohdichte zwischen 0,1 und 0,5 g/cm³, wobei ein Teil des vom Filz durch Eintauchen aufgenommenen Bindemittels durch Abpressen, Auswalzen o. dgl. vor dem Verkoken bzw. Graphitisieren aus dem Filz entfernt worden ist. Durch diese partielle Imprägnierung des Filzes, die bedeutet, daß ein großer Teil des beim Imprägnieren von dem Filz aufgenommenen Bindemittels vor dem Verkoken durch Druckeinwirkung (also beispielsweise durch Ausquetschen) aus den Poren des Filzes wieder entfernt wird, so daß nur die auf den Filzfasern verbleibende, relativ geringe Bindemittelmenge nach Härtung und Carbonisierung des Filzes die gewünschte Formstabilität und Steifigkeit des Kohlenstoffkörpers ergibt, wird unerwünschte Schrumpfung vermieden bei gleichzeitiger Einstellung einer relativ geringen Rohdichte.

Es hat sich nun gezeigt, daß derartige Kohlenstoffkörper in den Fällen, in denen sie zur Be-und Auskleidung anderer als ebener Konfigurationen, beispielsweise von gegen Wärmeverlust zu - schützenden Rohren oder zylindrischer Gefäße, dienen sollen, aufgrund ihrer Biegesteifigkeit nur - schwerlich an die gekrümmten Flächen, die sie verkleiden sollen, angepaßt bzw. angelegt werden können und in jedem Fall Halterungselemente erfordern, die verhindern, daß sie nach erfolgter elastischer Verformung zur Anpassung an derartige Flächen und Körper in ihre ebene Ausgangslage zurückkehren.

Es sind nun zwar selbsttragende, formbeständige Kohlenstoffverbundkörper aus mehreren miteinander verbundenen Kohlenstoffilzen und einen oder mehreren mit diesen verklebten, dünnen, blechartigen polygranularen Kohlenstoffkörpern, bestehend aus körnigen bzw. pulverigen und/oder faserförmigen Kunststoffteilchen als Füllmaterial und einem verkokten Bindemittel, vorgeschlagen worden, die auch schalenförmig gekrümmt sein können oder zu Hohlkörpern zusammengesetzt werden, jedoch besteht dieser Verbundkörper nicht nur aus Filz, sondern auch aus anderen Kohlenstoffteilchen und wird, sofern er - schalenförmig gekrümmt sein soll, in entsprechend gestalteten Formen verpreßt (P 34 35 044.6).

Die Aufgabe der Erfindung besteht deshalb darin, einen Kohlenstoffkörper der genannten Art zu schaffen, der eine gekrümmte Oberfläche aufweist, die einen Hohlraum umschließt, und hierfür ein vergleichsweise einfaches Herstellungsverfahren zu entwickeln.

Diese Aufgabe wird erfindungsgemäß dadurch gelöst, daß der Filz in Form von Streifen in mehreren einander überlappenden, miteinander verklebten Lagen zu einem Hohlkörper beliebiger Konfiguration gewickelt ist.

Zur Herstellung des erfindungsgemäßen Kohlenstoffkörpers dient ein Verfahren, bei dem ein ein-oder mehrlagiger Kohlenstoff-oder Graphitfilz steifenförmig zugeschnitten wird, anschließend in ein kohlenstoffhaltiges Bindemittel getaucht wird, das danach durch Abpressen, Auswalzen o.dgl. zumindest teilweise entfernt wird, woraufhin die Filzstreifen in mehreren einander überlappenden Lagen rechtsund/oder linksgängig schraubenförmig auf einen Materialkern unter Zug-bzw. Druckkrafteinwirkung gewickelt und anschließend unter Wärmeeinwirkung kondensiert und verkokt werden, wobei die übereinander und nebeneinander liegenden Filzstreifen miteinander verkleben.

Auf diese Weise ist die Möglichkeit gegeben, aus einem ein-oder mehrlagigen Filzstreifenmaterial durch Wickeln Hohlkörper an sich beliebiger Konfiguration herzustellen, die formstabil sind, diese Konfiguration also nach dem Verkoken des Bindemittels beibehalten.

Das Wickeln der mit Bindemittel getränkten Filzstreifen erfolgt vorteilhafterweise auf Materialkerne, deren Gestalt der Form des zu schaffenden Hohlkörpers entspricht und die, falls es sich um einfache geometrische Formen, beispielsweise Rohre handelt, nach dem Kondensieren der Filzsteifen entfernt werden oder die gleich mit verkokt werden, falls das Kernmaterial eine Substanz ist, beispielsweise Pappe, Holz oder Kunststoff, welche dabei so zersetzt wird, daß sie danach leicht entfernt werden kann.

Das Mitverkoken hat sich insbesondere in den Fällen bewährt, in denen eine nachträgliche Entfernung des Kerns nach der Kondensation aufgrund der Konfiguration des Hohlkörpers nur schwer möglich ist, falls der Hohlkörper zu diesem Zweck nicht aufgeschnitten werden soll oder darf, so beispielsweise bei gefäßförmigen Hohlkörpern.

Insbesondere die Herstellung von rohrförmigen Hohlkörpern durch entsprechendes eingängiges oder mehrgängiges Wickeln von ein-oder mehrlagigen Filzstreifen in Form einer kontinuierlichen Fertigung hat sich bewährt, wobei die gewünschten gewickelten Rohrlängen jeweils von dem entstehenden Produkt abgeschnitten bzw. stirnseitig abgestochen werden. In den Fällen, in denen als Materialkern ein Metallzylinder dient, der nach Fertigstellung des gewickelten Rohrkörpers aus dessen Hohlraum wieder entfernt werden soll, wird zweckmäßigerweise auf der Oberfläche des Metallzylinders ein das Festkleben des Filzes auf der Metalloberfläche hemmendes Material verwendet.

Weitere vorteilhafte Ausgestaltungen der Erfindung sind in den Unteransprüchen gekennzeichnet.

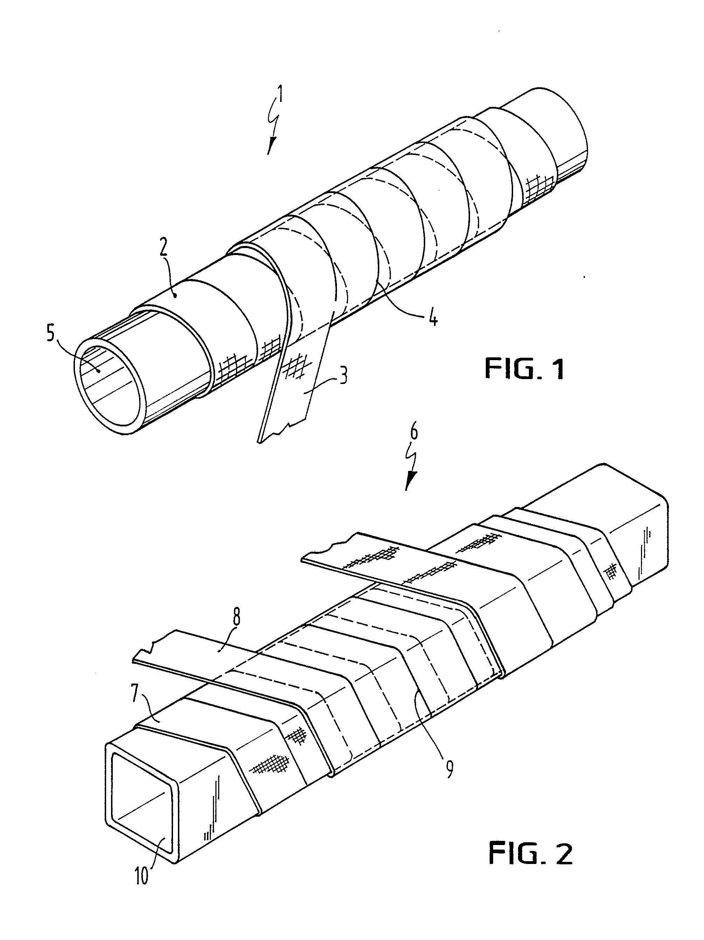

In der Zeichnung sind in schematischer, perspektivischer Darstellung zwei Ausführungsbeispiele eines durch schraubenförmiges Aufwickeln auf einen Materialkern entstehenden Hohlkörpers beispielshalber dargestellt, wobei einmal ein zylindrisches Rohr und ein anderes mal ein Rohr rechteckigen Querschnitts als Materialkern dient.

Zur Herstellung eines aus Kohlenstoff-oder Graphitfilz bestehendes Rohres 1 bzw. 6 mit einem Innendurchmesser von beispielsweise 50cm wird ein-oder mehrlagiges Filzmaterial aus Kohlenstoff oder Graphit in Streifenform mit einer Breite von beispielsweise 4cm zunächst in ein Bindemittel getaucht, das aus Phenolformaldehydharz oder dessen Lösung besteht,woraufhin durch Hindurchschicken des vollgesaugten Filzstreifens durch eine Presse ein Teil der Imprägnierlösung wieder entfernt wird, wobei, wie bereits erwähnt, selbstverständlich auch mit unverdünntem Bindemittel gearbeitet werden kann. Das Ausmaß der Entfernung richtet sich nach der angestrebten Rohdichte des fertigen Kohlenstoffkörpers nach der Verkokung des Bindemittels, die 0,1 bis 0,5 g/cm³ betragen soll.

Der auf diese Weise vorbereitete Filzstreifen wird spiralförmig auf einen Materialkern 5 bzw. 10 in Form eines zylindrischen bzw. quadratischen Papprohres aufgewickelt, wobei die Randkanten des Streifens, wie bei 4 und 9 in der Zeichnung dargestellt, aneinanderstoßen.

Auf diese Weise entsteht auf dem Papprohr eine Filzlage 2 bzw. 7. Über diese Filzlage wird ein weiterer Filzstreifen 3 bzw. 8 so gewickelt, daß er die Stöße der ersten Lage überlappt, wobei die Wickelrichtung von linksgängig auf rechtsgängig oder umgekehrt geändert werden kann. Auf die so entstehende zweite Filzlage lassen sich weitere Lagen aufwickeln, und zwar in Abhängigkeit von der gewünschten Wanddicke des herzustellenden Rohres 1 bzw. 6 und der Dicke der verwendeten Filzstreifen.

Daraufhin wird der so gewickelte Körper im Trockenschrank bei 150°C wärmebehandelt, wodurch das Bindemittel kondensiert und die Filzstreifenlagen homogen miteinander verkleben.

Danach wird der auf diese Weise entstandene, völlig formstabile Kohlenstoffkörper in an sich bekannter Weise bei 800°C verkokt, wobei auch die Papphülse mit verkokt. Das erhaltene Rohr aus Kohlenstoffilz läßt sich dann in gewünschte Längenstücke zerschneiden.

Anstelle eines Rohres zylindrischen oder quadratischen Querschnitts lassen sich natürlich auf diese Weise auch Kohlenstoffrohre mit anderen Querschnitten herstellen, wobei jeweils der Wickelkern die entsprechende Oberflächenkonfiguration aufweist.

Ebenso ist das Wickeln von Hohlkörpern an sich beliebiger Konfiguration, beispielsweise von Gefäßen, mittels einund mehrlagiger Kohlenstoffilzstreifen möglich, wobei die verwendeten Wickelkerne entweder durch geeignete Öffnungen aus dem fertig gewickelten Hohlkörper entfernt werden oder bei der Verkokung vollständig oder teilweise zerstört werden. Die Kerne können also auch als Kohlenstoffmaterial im Hohlkörper verbleiben, wobei sie dann mit den Filzstreifen einen Verbundkörper bilden.

Als Materialkerne können auch Holz-oder Kunststoffkörper dienen oder metallische Körper, deren Oberflächen gegebenenfalls vorbehandelt werden müssen, um ein Festkleben des gewickelten Hohlkörpers auf ihnen zu vermeiden.

Ferner ist die Möglichkeit gegeben, als hohlen Wickelkern von Anfang an ein Kohlenstoffmaterial in Form eines selbsttragenden, formstabilen Körpers zu verwenden, der nach der Verkokung des Filzes Bestandteil des geschaffenen Hohlkörpers bleibt. Dieser formstabile Körper kann beispielsweise nach dem Verfahren gemäß Patentanmeldung P 34 35 044.6 hergestellt worden sein, oder er kann ein gebrannter oder nicht gebrannter Kohlenstoffkörper sein, der in herkömmlicher Weise aus Kohlenstoffpulver und Bindemittel hergestellt wurde.

## Ansprüche

1. Kohlenstoffkörper hoher Porosität, niedriger Rohdichte und Wärmeleitfähigkeit aus ein-oder mehrlagigem Kohlenstoff-oder Graphitfilz, der mit einem kohlenstoffhaltigen Bindemittel imprägniert worden ist, das nach der Imprägnierung zumindest teilweise durch Abpressen, Auswalzen o. dgl. entfernt worden ist und der anschließend durch Einwirkung von Druck und Wärme verkokt bzw. graphitisiert worden ist, dadurch **gekennzeichnet**, daß der Filz in Form von Streifen in mehreren einander überlappenden, miteinander verklebten Lagen (2, 3; 7, 8) zu einem Hohlkörper beliebiger Konfiguration gewickelt ist.

2. Kohlenstoffkörper nach Anspruch 1, dadurch **gekennzeichnet**, daß die Oberflächen der einzelnen übereinanderliegenden Filzstreifen (2, 3; 7, 8) durch Kondensation des Bindemittels miteinander homogen verklebt sind.

3. Kohlenstoffkörper nach Anspruch 1 oder 2, dadurch **gekennzeichnet**, daß der Hohlkörper formstabil ist.

4. Kohlenstoffkörper nach einem der Ansprüche 1 -3, dadurch **gekennzeichnet**, daß die Filzstreifen (2, 3; 7, 8) auf einen Materialkern (5; 1O) aufgewickelt sind, der als Bestandteil des fertigen Hohlkörpers zumindest teilweisebeim Verkokungsvorgang erhaltengeblieben ist.

5. Kohlenstoffkörper nach Anspruch 4, dadurch **gekennzeichnet**, daß der fertige Hohlkörper ein selbsttragender, formbeständiger Kohlenstoffverbundkörper ist.

6. Kohlenstoffkörper nach einem der Ansprüche 1 -5, dadurch **gekennzeichnet**, daß der Hohlkörper ein Körper mit zumindest teilweise gekrümmter Oberfläche ist.

7. Kohlenstoffkörper nach Anspruch 5, dadurch **gekennzeichnet**, daß der Hohlkörper ein Rohr (1; 6) ist.

8. Kohlenstoffkörper nach Anspruch 7, dadurch **gekennzeichnet**, daß das Rohr (1) einen zylindrischen Querschnitt hat.

9. Kohlenstoffkörper nach Anspruch 7, dadurch **gekennzeichnet**, daß das Rohr (6) einen polygonalen Querschnitt hat.

1O. Kohlenstoffkörper nach einem der Ansprüche 7-9, dadurch **gekennzeichnet**, daß der Querschnitt des Rohres uneinheitlich ist.

11. Kohlenstoffkörper nach einem der Ansprüche 1-6, dadurch **gekennzeichnet**, daß der Hohlkörper die Form eines Gefäßes hat.

12. Verfahren zur Herstellung eines Kohlenstoffkörpers nach einem der Ansprüche 1-11, dadurch **gekennzeichnet**, daß ein ein-oder mehrlagiger Kohlenstoff-oder Graphitfilz streifenförmig zugeschnitten und anschließend in ein kohlenstoffhaltiges Bindemittel getaucht wird, das danach durch Abpressen, Auswalzen o. dgl. zumindest teilweise entfernt wird, woraufhin der Filzstreifen in mehreren einander überlappenden Lagen rechts- und/oder linksgängig schraubenförmig unter Zugkrafteinwirkung auf einen Materialkern gewickelt und anschließend unter Wärmeeinwirkung verkokt wird, wobei die übereinanderliegenden Filzstreifen durch Kondensation des Bindemittels miteinander verkleben.

13. Verfahren nach Anspruch 12, dadurch **gekennzeichnet**, daß der Materialkern nach der Verkokung des Filzstreifens zur Schaffung des Hohlkörpers entfernt wird.

14. Verfahren nach Anspruch 12, dadurch **gekennzeichnet**, daß der Materialkern durch die Wärmeeinwirkung bei der Verkokung des Filzstreifens mit verkokt wird.

15. Verfahren nach einem der Ansprüche 12-14, dadurch **gekennzeichnet**, daß als Materialkern ein Hohlkörper verwendet wird.

16. Verfahren nach einem der Ansprüche 12-15, dadurch **gekennzeichnet**, daß für die Herstellung von rohrförmigen Hohlkörpern Papphülsen geeigneten Querschnitts als Materialkern verwendet werden.

17. Verfahren nach einem der Ansprüche 12-15, dadurch **gekennzeichnet**, daß als Materialkern ein Holzkörper oder Kunststoffkörper verwendet wird.

18. Verfahren nach einem der Ansprüche 12-15, dadurch **gekennzeichnet**, daß bei der Herstellung von rohrförmigen Hohlkörpern ein Metallkern verwendet wird, dessen Oberfläche mit einem das Verkleben mit dem Bindemittel des Filzes hemmenden Material versehen wird.

19. Verfahren nach einem der Ansprüche 12-15, dadurch **gekennzeichnet**, daß als Materialkern ein Kohlenstoffkörper verwendet wird.

2O. Verfahren nach einem der Ansprüche 12-15, dadurch **gekennzeichnet**, daß als Materialkern ein selbsttragender, formbeständiger Kohlenstoffverbundkörper verwendet wird.

21. Verfahren nach einem der Ansprüche 12-16, dadurch **gekennzeichnet**, daß die stirnseitigen Enden des gewickelten Hohlkörpers abgeschnitten werden.

FIG. 1

FIG. 2